Europäisches Patentamt

European Patent Office

Office européen des brevets

(19)

(11) Numéro de publication : **0 080 951 B1**

(12) **FASCICULE DE BREVET EUROPÉEN**

(51) Int. Cl.⁴ : **F 16 D 55/224**

(45) Date de publication du fascicule du brevet :
**30.01.85**

(21) Numéro de dépôt : **82402170.3**

(22) Date de dépôt : **29.11.82**

(54) **Frein à disque.**

(30) Priorité : **30.11.81 FR 8122348**

(43) Date de publication de la demande :
**08.06.83 Bulletin 83/23**

(45) Mention de la délivrance du brevet :
**30.01.85 Bulletin 85/05**

(84) Etats contractants désignés :
**DE GB IT NL SE**

(56) Documents cités :
**EP-A- 0 030 502**
**EP-A- 0 036 368**
**FR-A- 1 284 624**
**FR-A- 1 309 863**
**FR-A- 2 093 867**
**FR-A- 2 283 358**
**FR-A- 2 338 420**
**FR-A- 2 422 863**
**FR-A- 2 444 848**

(73) Titulaire : **SOCIETE ANONYME D.B.A.**
**Centre Paris Pleyel**
**F-93521 St-Denis Cedex 01 (FR)**

(72) Inventeur : **Courbot, Pierre**
**1 bis rue d'Hérivaux**
**F-95400 Villiers le Bel (FR)**

(74) Mandataire : **Poidatz, Emmanuel et al**
**Service Brevets Bendix 44 rue François 1er**
**F-75008 Paris (FR)**

Jouve, 18, rue St-Denis, 75001 Paris, France

## Description

La présente invention a pour objet un frein à disque.

Elle vise plus particulièrement un frein à disque du type comprenant un étrier monté coulissant sur un support fixe au moyen d'une colonnette s'étendant parallèlement à l'axe du disque, solidaire de l'étrier ou du support fixe et reçue en coulissement dans un alésage correspondant du support fixe ou de l'étrier, et un élément de verrouillage associé à l'étrier et au support fixe pour coopérer au guidage des déplacements axiaux de l'étrier par rapport au support fixe et s'opposer à son basculement autour de la colonnette axiale lorsqu'il occupe sa position normale de fonctionnement.

La demande de brevet européen n° 0 030 502 décrit et représente un frein à disque du type mentionné ci-dessus dans lequel l'élément de verrouillage est constitué par la coopération de deux surfaces de coulissement axial complémentaires formées respectivement sur l'étrier et sur le support fixe qui sont maintenues en contact au moyen d'un ressort fixé à l'étrier et prenant appui sur des organes de friction. Dans ce type de frein, les surfaces de coulissement sont exposées aux intempéries et sujettes aux accumulations d'impuretés et à la corrosion. On a déjà proposé dans la demande de brevet européen n° 0 036 368 de remédier à cet inconvénient en prévoyant que ledit élément de verrouillage soit constitué par un élément élastique allongé fixé au support fixe ou à l'étrier et maintenu élastiquement dans un plan parallèle à un plan tangeant à la circonférence externe de l'étrier en vis-à-vis d'une portion entaillée formée dans l'étrier ou dans le support fixe. Dans la solution proposée, l'élément élastique de verrouillage consiste en un fil métallique de section circulaire qui coopère avec des surfaces planes formées sur l'étrier et sur le support fixe pour assurer le guidage des mouvements relatifs de ces deux éléments. Si la solution proposée améliore les problèmes de corrosion, elle ne les supprime pas totalement.

La demande de brevet français n° 2 422 863 décrit et représente un frein à disque, dans lequel l'élément de verrouillage a été supprimé. On comprend naturellement qu'ainsi tous les problèmes de corrosion et de frottement relatif apparaissant au niveau de l'élément de verrouillage sont bien entendu supprimés. Toutefois, afin de maintenir l'étrier dans une position correcte par rapport au support fixe et au disque tournant lors du fonctionnement normal du frein la demande propose des moyens de blocage propres à s'opposer à tout basculement de l'étrier autour de la colonnette axiale unique qui coopèrent directement avec la colonnette. Dans la solution proposée, les moyens de blocage comportent un ressort de torsion dont une extrémité est fixée à l'étrier et dont l'autre extrémité est fixée à la colonnette axiale. Afin de s'opposer à tout mouvement parasite de basculement de l'étrier, on conçoit qu'il est nécessaire de prévoir un ressort de torsion ayant une caractéristique élevée. De plus lorsque l'on désire procéder au remplacement des éléments de friction, c'est-à-dire lorsqu'il est nécessaire de basculer l'étrier autour de la colonnette axiale, il est nécessaire de retirer le ressort de torsion. Ce dernier étant soumis à de nombreux chocs thermiques lors des multiples actionnements du frein, on ne peut être certain que sa caractéristique élastique restera constante au cours du temps et l'on comprend ainsi qu'il existe un risque de basculement intempestif de l'étrier autour de la colonnette au cas où les moyens de blocage constitués par le ressort ne rempliraient plus leur fonction.

L'invention a pour but de proposer un frein à disque qui remédie aux inconvénients inhérents aux deux types de frein à colonnette axiale mentionnés ci-dessus.

Dans ce but, l'invention propose un frein à disque selon la revendication 1. L'élément de verrouillage est une biellette dont une première extrémité est articulée sur l'étrier et dont la seconde extrémité est articulée sur le support fixe. Selon un mode de réalisation préféré de l'invention, les deux extrémités de la biellette sont articulées sur l'étrier et sur le support fixe au moyen d'articulations permettant à la biellette de se déplacer dans un plan perpendiculaire au plan du disque.

L'élément de verrouillage constitué par la biellette, permet de guider les déplacements de l'étrier par rapport au support fixe mais permet également de supprimer toute liaison par coulissement autre que la liaison principale constituée par la colonnette axiale. On comprend que grâce à une telle structure de l'élément de verrouillage, tout problème de corrosion et de basculement intempestif de l'étrier est supprimé.

L'invention sera maintenant décrite en détail en se référant aux dessins annexés dans lesquels :

la figure 1 est une vue de côté d'un frein à disque réalisé conformément aux enseignements de la présente invention ;

la figure 2 est une vue de dessus du frein à disque de la figure 1 ;

la figure 3 est une vue partielle en coupe selon la ligne 3-3 du frein de la figure 1 ;

la figure 4 est une vue en coupe selon la ligne 4-4 d'un détail du frein à disque de la figure 2 ;

la figure 5 est une vue en coupe partielle selon la ligne 5-5 du frein à disque de la figure 1 ; et

la figure 6 est une vue similaire à celle de la figure 1 sur laquelle sont représentées les diverses positions occupées par l'étrier et l'élément de verrouillage lors de la mise en place de l'étrier sur le support fixe.

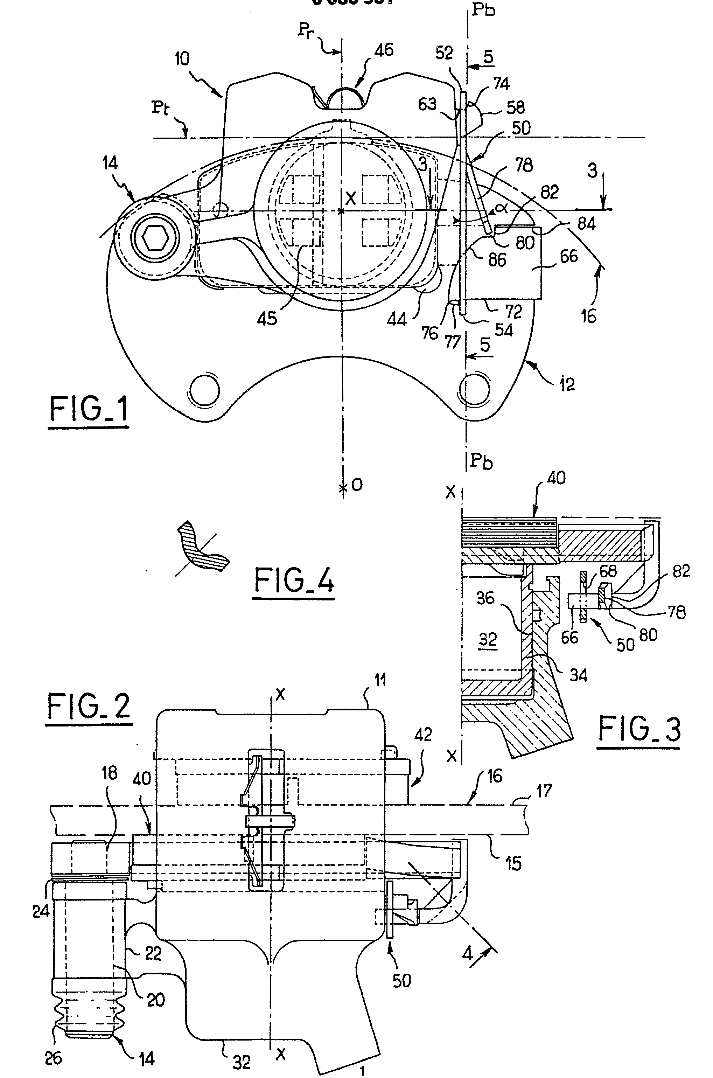

Le frein à disque représenté aux figures 1 à 6 comprend un étrier mobile 10 monté coulissant sur un organe ou support fixe 12. L'étrier 10 est monté coulissant sur le support fixe au moyen d'une colonnette 14 s'étendant parallèlement à l'axe de rotation du disque tournant 16. Dans le mode de réalisation représenté, et comme le montre plus particulièrement la figure 2, la colonnette axiale 14 est fixée au support fixe 12 par une liaison filetée 18. La colonnette axiale 14 est reçue en coulissement dans un alésage cylindrique 20 formé dans un bras 22 de l'étrier 10. Des soufflets de protection en caoutchouc 24 et 26 sont prévus de part et d'autre du bras 22 pour protéger la surface de coulissement constituée par la surface externe de la colonnette axiale 14. Le frein à disque comprend également un moteur de frein hydraulique comprenant un piston cylindrique monté coulissant dans un alésage cylindrique 36 usiné dans l'étrier 10. L'axe XX commun au piston 34 et à l'alésage cylindrique 36 est parallèle à l'axe de rotation O du disque. Le frein à disque comprend également un élément de friction interne 40 susceptible d'être sollicité directement en engagement de friction avec la face interne 15 du disque tournant lors de l'actionnement du moteur de frein hydraulique 32 et un élément de friction externe 42 fixé à la partie extrême ou nez 11 de l'étrier. Lors de l'actionnement du moteur de frein hydraulique 32, l'élément de friction externe 42 est sollicité en engagement de friction avec la face externe 17 du disque tournant 16, par réaction au travers de l'étrier coulissant 10.

L'élément de friction interne 40 est reçu en ancrage et en coulissement dans une ouverture 44 du support fixe 12. L'élément de friction externe 42 est fixé au nez 11 de l'étrier 10 par des moyens de fixation et de positionnement 45. Les structures particulières des organes de friction interne et externe 40 et 42 ainsi que leurs moyens de fixation dans le frein à disque, ne seront pas ici décrits plus en détail, ces caractéristiques faisant l'objet d'une première demande de brevet au nom de la demanderesse et déposée le même jour que la présente demande. Le frein à disque représenté aux figures comprend en outre un ressort d'élément de friction 46 du type de celui décrit dans la demande de brevet français n° 81-03268 et qui ne sera pas ici décrit plus en détail.

Conformément à l'invention, le frein à disque comprend un élément de verrouillage 50 associé à l'étrier 10 et au support fixe 12 pour coopérer au guidage des déplacements axiaux de l'étrier par rapport au support fixe lors de l'actionnement du moteur de frein hydraulique 32. L'élément de verrouillage 50 a également pour fonction de s'opposer au basculement de l'étrier 10 autour de la colonnette axiale 14 lorsqu'il occupe la position normale de fonctionnement.

Selon une première caractéristique de l'invention, l'élément de verrouillage 50 est constitué par une biellette dont une première extrémité 52 est articulée sur l'étrier 10 et dont la seconde extrémité 54 est articulée sur le support fixe 12.

Dans le mode de réalisation représenté, la biellette 50 est réalisée en tôle. La première extrémité 52 est articulée sur l'étrier 10 au moyen d'une articulation 56 qui est constituée par un ergot 58 venu de matière avec la voûte de l'étrier 10 et qui pénètre dans une ouverture 60 formée au voisinage de la première extrémité 52 de la biellette 50. Dans le mode de réalisation représenté, l'ouverture 60 est découpée dans la biellette en tôle. Le bord latéral supérieur 62 de l'ouverture 60 possède un profil arrondi convexe de façon à définir une surface de butée arrondie qui coopère et prend appui sur une surface d'appui 63 constituée par la face supérieure de l'ergot 58.

D'une façon similaire, la seconde extrémité 54 de la biellette 50 est articulée sur le support fixe 12 au moyen d'une articulation 64. L'articulation 64 est constituée par un bras 66 s'étendant depuis le support fixe 12 et pénétrant dans une ouverture 68 formée au voisinage de la seconde extrémité 54 de la biellette 50. Dans le mode de réalisation représenté, l'ouverture 68 est découpée dans la biellette en tôle 50. Le bord transversal inférieur 70 de l'ouverture 68 présente un profil arrondi convexe de façon à définir une surface de butée arrondie qui coopère et prend appui sur une surface d'appui correspondante formée sur le support fixe 12. Cette seconde surface d'appui 72 étant constituée par la face inférieure du bras 66.

Comme on peut le constater notamment à la figure 1, lorsque l'étrier 10 occupe sa position normale de fonctionnement, la biellette 50 s'étend dans un plan Pb perpendiculaire au plan du disque tournant 16 et parallèle à un plan radial Pr passant par l'axe O du disque et par l'axe XX du moteur de frein 32. Les faces supérieures 63 de l'ergot 58 et inférieure 72 du bras 66 sont parallèles à un plan Pt tangeant à la circonférence externe du disque, le plan Pt étant lui-même perpendiculaire audit plan radial Pr. On comprend ainsi que grâce aux articulations 56 et 64, la biellette 50 est susceptible de se déplacer dans le plan Pb autour des points d'articulation $A_1$ et $A_2$ constitués par les points de contact entre la surface arrondie 62 et la face supérieure 63 de l'ergot 58 et la surface arrondie 70 et la face inférieure 72 du bras 66 respectivement. Lors de l'actionnement du moteur hydraulique de frein, l'étrier coulissant 10 se déplace parallèlement à l'axe du disque O pour provoquer l'engagement de friction des deux organes de friction 40 et 42 avec le disque tournant 16. Ce mouvement de coulissement est permis par la colonnette axiale 14. L'élément de verrouillage constitué par la biellette 50 coopère au guidage de l'étrier lors du coulissement, en pivotant dans le plan Pb autour des articulations 56 et 64. Les axes des articulations 56 et 64 étant perpendiculaires au plan radial Pr, le déplacement de la biellette dans le plan Pb n'introduit aucun effort parasite susceptible d'affecter la qualité du coulissement de l'étrier 10 par rapport au support fixe 12.

Dans le mode de réalisation de l'invention représenté aux figures, les surfaces de butée arrondies 62 et 70 sont maintenues en contact avec les surfaces d'appui correspondantes 64 et 72 par le ressort 46 qui sollicite l'étrier 10 en éloignement du support fixe 12 et tend à provoquer le basculement de celui-ci autour de l'axe de la colonnette axiale 14. En conséquence, la biellette 50 a pour double fonction d'une part de coopérer au guidage de l'étrier 10 et d'autre part de s'opposer au basculement de ce dernier autour de la colonnette axiale 14, sous l'effort appliqué par le ressort 46.

Afin d'éviter un échappement accidentel de la biellette 50, l'ergot 58 est muni d'un bord supérieure 74 s'étendant vers le haut parallèlement au plan Pb pour coopérer avec l'extrémité supérieure 52 de la biellette 50 et maintenir cette dernière en position sur l'ergot 58. De la même manière, la face inférieure 72 du bras 66 est munie d'un bord 76 s'étendant depuis la face supérieure vers le bas parallèlement au plan Pb.

Des moyens de sécurité supplémentaires sont prévus pour éviter un échappement accidentel de la biellette 50. Ces moyens sont constitués par une lame 78 venue de matière avec la biellette 50. La lame 78 fait avec le plan Pb de la biellette 50 un angle aigu. L'extrémité libre 80 de la lame 78 coopère avec une surface de butée 82 formée sur le bras 66. La surface de butée 82 est constituée par un dégagement à angle droit formé sur la face supérieure 84 du bras 66. Lorsque l'extrémité 80 de la lame 78 est en vis-à-vis de la surface de butée 82, et comme on peut le constater notamment à la figure 1, il est impossible de dégager le bras 66 de l'ouverture 68 découpée dans la seconde extrémité 54 de la biellette 50 et donc par là même impossible de basculer l'étrier autour de la colonnette 14 à l'encontre de l'effort exercé par le ressort 46.

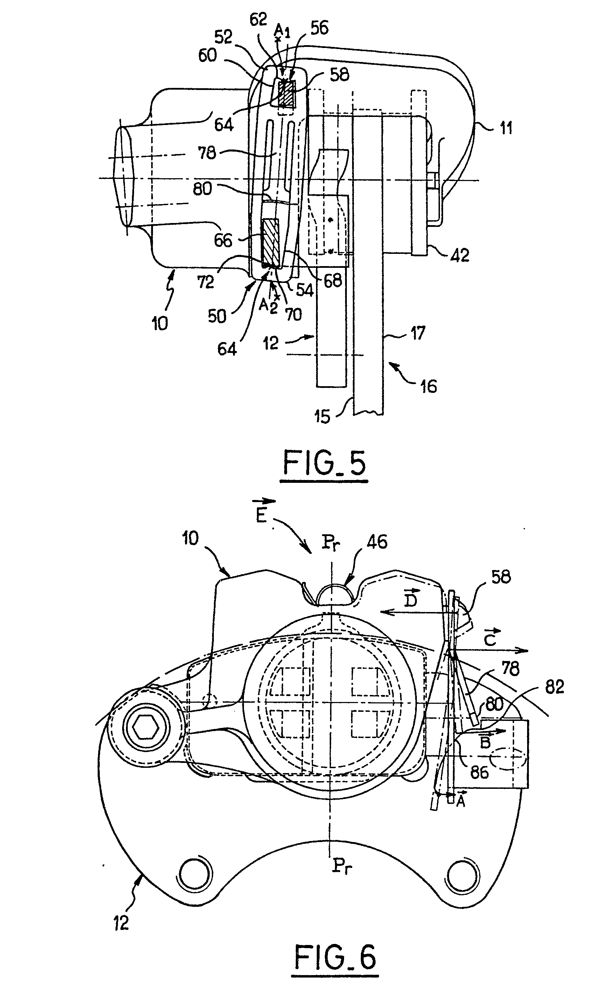

On décrira maintenant les phases d'assemblage du frein en se référant à la figure 6.

Lorsqu'un opérateur désire réaliser l'assemblage du frein, après avoir enfilé l'étrier sur la colonnette axiale 14, il introduit l'ergot 58 dans l'ouverture 60 formée à proximité de la première extrémité 52 de la biellette 50. Il bascule ensuite l'étrier 10 autour de la colonnette 14 dans la direction indiquée par la flèche E. Lors de ce basculement la seconde extrémité 54 de la biellette 50 et l'extrémité 80 de la lame de sécurité 78 prennent appui sur une surface en forme de rampe 86 formée à l'extrémité du bras 66. La rampe 86 provoque un déplacement des extrémités 54 et 80 en direction du plan Pr. A cet instant, la biellette et l'étrier 10 occupent la position représentée en traits mixtes à la figure 6. Dans cette position et dès que la surface de butée arrondie 70 a dépassé l'extrémité 77 du bord 76 du bras 66, sous l'effort élastique dû à la déformation de la lame, l'extrémité 54 et l'extrémité 80 se déplacent dans les directions indiquées par les flèches A et B jusqu'à occuper leurs positions normales de fonctionnement représentées en trait plein. Lors de ce même déplacement, l'extrémité 52 et la partie médiane de la biellette 50 se déplacent dans les directions indiquées par les flèches D et C. L'opérateur n'a plus alors qu'à relâcher l'effort appliqué dans la direction E sur l'étrier 10 à l'encontre du ressort 46 pour provoquer le verrouillage en position de la biellette 50. On comprend qu'ainsi on a réalisé un moyen de verrouillage automatique de l'étrier 10 en position par rapport au support fixe 12 par simple basculement de celui-ci autour de la colonnette 14.

**Revendications**

1. Frein à disque du type comprenant un étrier (10) monté coulissant sur un support fixe (12) au moyen d'une colonnette (14) s'étendant parallèlement à l'axe (O) du disque, solidaire de l'étrier (10) ou du support fixe (12) et reçue en coulissement dans un alésage correspondant (20) du support fixe ou de l'étrier, et un élément de verrouillage (50) associé audit étrier (10) et au support fixe (12) pour coopérer au guidage des déplacements axiaux dudit étrier par rapport audit support fixe et s'opposer à son basculement autour de ladite colonnette (14) lorsqu'il occupe sa position normale de fonctionnement, caractérisé en ce que ledit élément de verrouillage (50) est une biellette rigide dont une première extrémité (52) est articulée sur ledit étrier (10) et dont la seconde extrémité (54) est articulée sur ledit support fixe (12).

2. Frein à disque selon la revendication 1, caractérisé en ce que lesdites deux extrémités (52, 54) de ladite biellette sont reliées audit étrier (10) et audit support fixe (12) au moyen d'articulations (56, 64) permettant à ladite biellette (50) de se déplacer dans un plan (Pb) perpendiculaire au plan du disque tournant.

3. Frein à disque selon la revendication 2, du type comportant un moteur de frein hydraulique (32) susceptible de solliciter un organe friction (40) en engagement de friction avec le disque tournant (16), caractérisé en ce que les axes desdites deux articulations (56, 64) sont perpendiculaires à un plan radial (Pr) passant par l'axe (O) du disque et par l'axe (XX) dudit moteur de frein (32).

4. Frein à disque selon l'une des revendications 1 à 3, caractérisé en ce que l'une au moins desdites articulations (56, 64) est constituée par une surface de butée arrondie (62, 70) formée à l'une desdites extrémités (52, 54) de la biellette (50) et prenant appui sur une surface d'appui correspondante (63, 70) formée sur l'étrier (10) ou le support fixe (12).

5. Frein à disque selon la revendication 4, caractérisé en ce que ladite biellette (50) est réalisée dans une tôle plane dans laquelle sont réalisées par découpage une première ouverture (60) au voisinage de ladite première extrémité (52), ladite surface de butée arrondie (62) étant constituée par le bord transversal supérieur de ladite première ouverture, et une seconde ouverture (68) formée au voisinage de ladite seconde extrémité (54), ladite seconde surface de butée arrondie (70) étant constituée par le bord transversal inférieur de ladite ouverture.

6. Frein à disque selon la revendication 4 ou 5, caractérisé en ce qu'il comporte des moyens de maintien de la biellette dans sa position normale de fonctionnement.

7. Frein à disque selon la revendication 6, caractérisé en ce que lesdits moyens de maintien comportent une lame (78) fixée à la biellette (50) et faisant avec le plan (Pb) de cette dernière un angle aigu (α), l'extrémité libre (80) de ladite lame prenant appui sur une surface de butée (82) formée sur ledit bras (66) du support fixe (12).

**Claims**

1. A disc brake of the type comprising a caliper (10) slidingly mounted on a fixed support (12) by means of a column (14) extending parallel to the axis (O) of the disc, fixedly connected to the caliper (10) or the fixed support (12) and slidingly received in a corresponding bore (12) of the fixed support or the caliper, and a locking element (50) associated with said caliper (10) and the fixed support (12) to cooperate in guiding of axial displacement of said caliper with respect to said fixed support and to resist pivotal movement thereof about said column (14) when it occupies its normal operating position, characterized in that said locking element (50) is a rigid connecting rod having a first extremity (52) articulated on said caliper (10) and a second extremity (54) articulated on said fixed support (12).

2. A disc brake as claimed in claim 1, characterized in that said two extremities (52, 54) of said connecting rod are connected to said caliper (10) and said fixed support (12) by means of joints (56, 64) permitting displacements of said connecting rod (50) in a plane (Pb) perpendicular to the plane of the rotating disc.

3. A disc brake as claimed in claim 2 of the type comprising a hydraulic brake motor (32) adapted to urge a friction element (40) into frictional engagement with the rotating disc (16), characterized in that the axes of said two joints (56, 64) are perpendicular to a radial plane (Pr) passing through the axis (O) of the disc and through the axis (XX) of said brake motor (32).

4. A disc brake as claimed in any of claims 1 to 3, characterized in that at least one of said joints (56, 64) is formed by a rounded abutment surface (62, 70) formed at one of said extremities (52, 54) of the connecting rod (50) and engaging a corresponding abutment surface (63, 70) formed on the caliper (10) or the fixed support (12).

5. A disc brake as claimed in claim 4, characterized in that said connecting rod (50) is comprised of a plane metal sheet, in which are formed by cutting a first opening (60) adjacent said first extremity (52), said rounded abutment surface (62) being formed by the transverse upper edge of said first opening, and a second opening (68) formed adjacent said second extremity (54), said second rounded abutment surface (70) being formed by the transverse lower edge of said opening.

6. A disc brake as claimed in claim 4 or claim 5, characterized in that it comprises holding means for holding the connecting rod in its normal operating position.

7. A disc brake as claimed in claim 6, characterized in that said holding means comprise a spring leaf (78) fixed to the connecting rod (50) and enclosing an acute angle (α) with the plane (Pb) of the latter, the free end (80) of said spring leaf engaging an abutment surface (82) formed on an arm (66) of the fixed support (12).

**Ansprüche**

1. Scheibenbremse mit einem Bremssattel (10), der auf einem ortsfesten Bremsträger (12) gleitbar gelagert ist mittels eines Bolzens (14), der sich parallel zur Achse (O) der Bremsscheibe erstreckt, mit dem Bremssattel (10) oder dem Bremsträger (12) fest verbunden ist und in einer entsprechenden Bohrung (20) des Bremsträgers oder Bremssattels gleitend aufgenommen ist, und einem Verriegelungselement (50), das dem Bremssattel (10) und dem Bremsträger (12) zugeordnet ist, um bei Axialverschiebungen des Bremssattels bezüglich des Bremsträgers die Führung zu unterstützen und Kippbewegungen um den Bolzen (14) entgegenzuwirken, wenn er seine normale Betriebsstellung einnimmt, dadurch gekennzeichnet, daß das Verriegelungselement (50) als starrer Lenker oder starres Pleuel ausgebildet ist, dessen erstes Ende (52) am Bremssattel (10) und dessen zweites Ende (54) am Bremsträger (12) gelenkig angebracht ist.

2. Scheibenbremse nach Anspruch 1, dadurch gekennzeichnet, daß die beiden Enden (52, 54) des Lenkers am Bremssattel (10) und am Bremsträger (12) mittels Gelenke (56, 64) angebracht sind, die dem Lenker (50) eine Verschiebung in einer Ebene (Pb) senkrecht zur Ebene der umlaufenden Bremsscheibe erlauben.

3. Scheibenbremse nach Anspruch 2 mit einem hydraulischen Bremsmotor (32), der dazu dient, ein Reibelement (40) in Reibanlage mit der umlaufenden Bremsscheibe (16) zu drücken, dadurch gekennzeichnet, daß die Achsen der beiden Gelenke (56, 64) senkrecht verlaufen zu einer radialen Ebene (Pr), die durch die Achse (O) der Bremsscheibe und durch die Achse (XX) des Bremsmotors (32) verläuft.

4. Scheibenbremse nach einem der Ansprüche 1-3, dadurch gekennzeichnet, daß mindestens eines der Gelenke (56, 64) von einer abgerundeten Anschlagfläche (62, 70) gebildet wird, die an einem der Enden (52, 54) des Lenkers (50) vorgesehen ist und sich an einer entsprechenden Anschlagfläche (63, 70) des Bremssattels (10) oder Bremsträgers (12) abstützt.

5. Scheibenbremse nach Anspruch 4, dadurch gekennzeichnet, daß der Lenker (50) aus einem ebenen Blechteil besteht, in dem eine erste Öffnung (60) benachbart zu dem besagten ersten Ende (52) eingeschnitten ist, wobei die abgerundete Anschlagfläche (62) von dem quer verlaufenden oberen Rand der ersten Öffnung gebildet wird, und in dem eine zweite Öffnung (68) benachbart zu dem besagten zweiten Ende (54) eingeschnitten ist, wobei die zweite abgerundete Anschlagfläche (70) von dem quer verlaufenden unteren Rand dieser Öffnung gebildet wird.

6. Scheibenbremse nach Anspruch 4 oder 5, gekennzeichnet durch Haltemittel, die den Lenker in seiner normalen Betriebsstellung halten.

7. Scheibenbremse nach Anspruch 6, dadurch gekennzeichnet, daß die Haltemittel aus einer Blattfeder (78) bestehen, die an dem Lenker (50) befestigt ist und mit der Ebene (Pb) des Lenkers einen spitzen Winkel (α) einschließt, wobei das freie Ende (80) der Blattfeder an einer Anschlagfläche (82) eines Armes (66) des Bremsträgers (12) abgestützt ist.

FIG_1

FIG_4

FIG_2

FIG_3

FIG_5

FIG_6